# EUROPÄISCHE PATENTANMELDUNG

(11) **EP 1 262 807 A2**
(43) Veröffentlichungstag der Anmeldung: **04.12.2002**
(21) Anmeldenummer: 02012007.7
(22) Anmeldetag: 31.05.2002
(51) Int. Cl.: G02B 6/38, G02B 6/42

(54) **Optisches Stecksystem für Datenbusse**

(30) Priorität: 01.06.2001 DE 10126756
(71) Anmelder: DaimlerChrysler AG, 70567 Stuttgart (DE)
(72) Erfinder: Kibler, Thomas, 88454 Unteressendorf (DE); Moisel, Jörg, Dr., 89231 Neu-Ulm (DE); Rode, Manfred, Dipl.-Ing., 89250 Senden (DE); Zeeb, Eberhard, Dr.-Ing., 89081 Ulm (DE)

(57) **Zusammenfassung**

Die Erfindung betrifft ein optisches Stecksystem für Datenbusse, bei dem im Stecker (ST) und in der Steckerbuchse optische Elemente (S,L,LWL) zur Umlenkung des Lichtes integriert sind. Mit dem Stecksystem wird das auf der Busleitung geführte Licht auf den optischen Empfänger eines zusätzlichen Busteilnehmers ausgekoppelt und das gesendete Licht des zusätzlichen Teilnehmers wird auf die Busleitung eingekoppelt. Die Steckerbuchse ist entweder in der Busleitung integriert oder es wird nachträglich eine Busbrücke in die Busleitung eingebracht.

## Beschreibung

### Optisches Stecksystem für Datenbusse

Die Erfindung betrifft ein optisches Stecksystem nach dem Oberbegriff des Patentanspruchs 1.

Optische Datenbussysteme werden in den letzten Jahren verstärkt in der Gebäudeverkabelung und in mobilen Systemen (Auto, Flugzeug etc.) eingesetzt. Die optischen physikalischen Busschichten haben vor allem in Bezug auf elektromagnetische Verträglichkeit und in Bezug auf eine hohe Übertragungsbandbreite Vorteile gegenüber elektrischen Systemen. Problematisch bei der optischen Verkabelung ist ein späterer Anschluß von Teilnehmern an die Busleitung. Werden lineare oder Ringbusse eingesetzt, bei denen die einzelnen Busteilnehmer als Signalregenerator des optischen Signals eingesetzt werden, erfordert dies entweder das Auftrennen der Busleitung, die zumindest teilweise Neuverkabelung zwischen bisher benachbarter Busteilnehmer oder aber den Vorhalt von teuren, aktiven Signalregeneratoren, die später durch den zusätzlichen Teilnehmer ersetzt werden.

Auf Grund der erhöhten Kosten kommen vor allem in mobilen Systemen keine aktiven Signalregeneratoren in Ringbussen oder linearen Bussen zur Anwendung.
Beim Einsatz von optischen Ringbussen werden zum Teil sogenannte passive in-line Stecker an vordefinierten Stellen auf der Busleitung verwendet, die zusätzliche Einfügedämpfungen verursachen. Beim späteren Teilnehmeranschluß werden die Stecker aufgetrennt, daß die Sende- und Empfangsleitung des neuen Teilnehmers an die offenen Steckerenden angesteckt werden können.
Das Ein- oder Ausstecken einzelner Busteilnehmer an den oder von dem Datenbus ohne mechanische Änderungen an der Busleitung oder an den Steckeranschlüssen ist nicht möglich.

Die Aufgabe der Erfindung besteht darin, ein optisches Stecksystem für Datenbusse anzugeben, das den Anschluß eines Teilnehmers an einen optischen Ringbus oder einen linearen optischen Bus gestattet und das Ein- oder Ausstecken einzelner Busteilnehmer an den oder von dem Datenbus ohne mechanische Änderungen an der Busleitung oder an den Steckeranschlüssen ermöglicht.

Die Erfindung ist in Anspruch 1 und 10 beschrieben. Vorteilhafte Ausgestaltungen und Weiterbildungen sind den Unteransprüchen zu entnehmen.

Die Erfindung geht davon aus, daß im Stecker und in der Steckerbuchse optische Elemente zur Umlenkung des Lichtes integriert sind, die das auf der Busleitung geführte Licht auf den optischen Empfänger des zusätzlichen Busteilnehmers auskoppeln und das gesendete Licht des zusätzlichen Teilnehmers wieder auf die Busleitung einkoppeln. Die Steckerbuchse ist entweder bereits auf der Busleitung an einem vordefinierten Ort vorhanden oder es wird nachträglich eine Busbrücke in die Busleitung eingebracht.

Die Erfindung hat den Vorteil, daß in die Steckerbuchse ein Stecker zum Anschluß eines weiteren Busteilnehmers eingesteckt wird, ohne mechanischen Eingriff auf die bestehende Busleitung. Das Stecksystem ist wieder lösbar und ermöglicht den sog. Plug-and-Play Betrieb eines optischen Ringbusses oder eines linearen optischen Busses.

Die Erfindung wird anhand von Ausführungsbeispielen beschrieben unter Bezugnahme auf schematische Zeichnungen.
- Fig. 1: zeigt einen Ringbus mit vorbereiteter Koppelstelle K.
- Fig. 2: stellt die Steckerbuchse der Koppelstelle mit Linsenoptik L dar.
- Fig. 3: zeigt einen Stecker mit integrierten Umlenkspiegeln S und Linsenoptik L.
- Fig. 4: zeigt einen Stecker mit integrierten Umlenkspiegeln S und erweiterter Linsenoptik L.
- Fig. 5: zeigt eine Busbrücke ohne Umlenkspiegel.
- Fig. 6: zeigt eine Busbrücke mit Umlenkspiegel S.

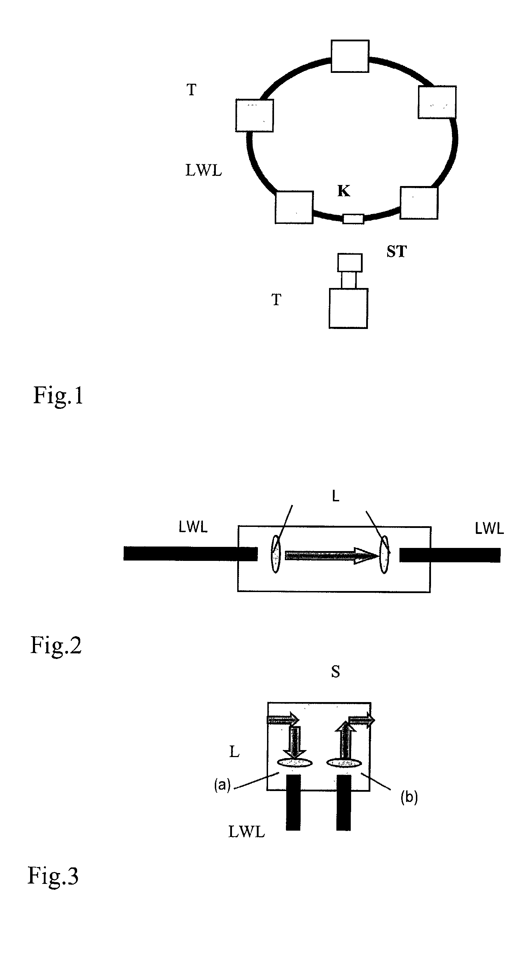

Für das erfindungsgemäße Stecksystem wird z.B. ein Duplexstecker mit integriertem Umlenkspiegel und integrierten Linsen verwendet. Auf der in Fig. 1 dargestellten Busleitung mit verschiedenen Terminals T für Teilnehmeranschlüsse ist eine vorbereitete Koppelstelle K eingebracht, an der der Lichtwellenleiter LWL aufgetrennt ist. Ein weiteres Terminal T ist über eine Steckerbuchse in der Koppelstelle eingekoppelt. Um die Einfügedämfung in der Steckerbuchse der Koppelstelle K gering zu halten, sind an den jeweiligen Enden der Lichtwellenleiter LWL Linsen L eingesetzt, die einen weitgehend parallelen Lichtstrahl erzeugen oder den parallelen Lichtstrahl wieder auf das Lichtwellenleiterende fokussieren (Fig. 2). Je nach Güte der verwendeten Optik wird die Einfügedämpfung der Steckerbuchse klein gehalten. Durch die Steckerbuchse ist die unterbrechungsfreie Übertragung auf der Datenbusleitung gewährleistet.
In die Steckerbuchse der Koppelstelle wird beispielsweise der in Fig. 3 skizzierte Stecker zum Anschluß eines weiteren Busteilnehmers ohne mechanischen Eingriff auf die bestehende Busleitung, d.h. ohne Auseinanderziehen der Busleitung eingesteckt. In dem Anschlußstecker sind kleine Umlenkspiegel S integriert, die das Licht von der Datenbusleitung auf die Empfangsleitung des Teilnehmeranschlusses auskoppeln oder von der Sendeleitung des Teilnehmeranschlusses auf die Busleitung einkoppeln. Das Licht wird beispielsweise über Lichtwellenleiter vom Stecker zu den Busteilnehmern geführt. Um die Einfügeverluste im Stecker klein zu halten, sind, wie in Fig. 3 dargestellt, an den jeweiligen Enden der Lichtwellenleiter LWL Linsen L zur Fokussierung des Lichts angebracht.

In einer weiteren Ausführung werden an den in Fig. 3 mit (a) und (b) bezeichneten Stellen im Stecker elektrooptische Wandlerelemente z.B. Laserdioden, Leuchtdioden oder Photoempfänger angebracht, die eine elektrische Steckerzuleitung vom Busteilnehmer ermöglichen.
Das Stecksystem ist jederzeit lösbar. Mit diesem Stecksystem erfolgt der sog. Plug-and-Play Betrieb eines optischen Ringbusses oder eines linearen optischen Busses.

In weiteren Ausführungen enthält die Steckerbuchse Umlenkelemente S, beispielsweise Spiegel, Wellenleiter, Prismen, oder auch diffraktive oder reflektive optische Elemente, um das Licht auf ein Empfangselement oder das Lichts aus einem Sendeelement bei einem zusätzlichen eingesteckten Teilnehmer der Busleitung auszukoppeln. Folgende Ausführungen sind realisierbar:
a) Die Steckerbuchse enthält zwei Linsen und Umlenkelemente. Die Auskopplung des Lichts auf das Empfangselement oder die Einkopplung des Lichts aus dem Sendeelement bei einem zusätzlich eingesteckten Teilnehmer erfolgt ohne weitere optische Elemente.
b) Die Steckerbuchse enthält zwei Linsen und Umlenkelemente. Die Auskopplung des Lichts auf das Empfangselement oder die Einkopplung des Lichts aus dem Sendeelement bei einem zusätzlich eingesteckten Teilnehmer erfolgt über zusätzliche Linsen.
c) Die Steckerbuchse enthält keine Linsen jedoch Umlenkelemente. Die Auskopplung des Lichts auf das Empfangselement oder die Einkopplung des Lichts aus dem Sendeelement bei einem zusätzlich eingesteckten Teilnehmer erfolgt ohne weitere optische Elemente.
d) Die Steckerbuchse enthält keine Linsen jedoch Umlenkelemente. Die Auskopplung des Lichts auf das Empfangselement oder die Einkopplung des Lichts aus dem Sendeelement bei einem zusätzlich eingesteckten Teilnehmer erfolgt über zusätzliche Linsen.

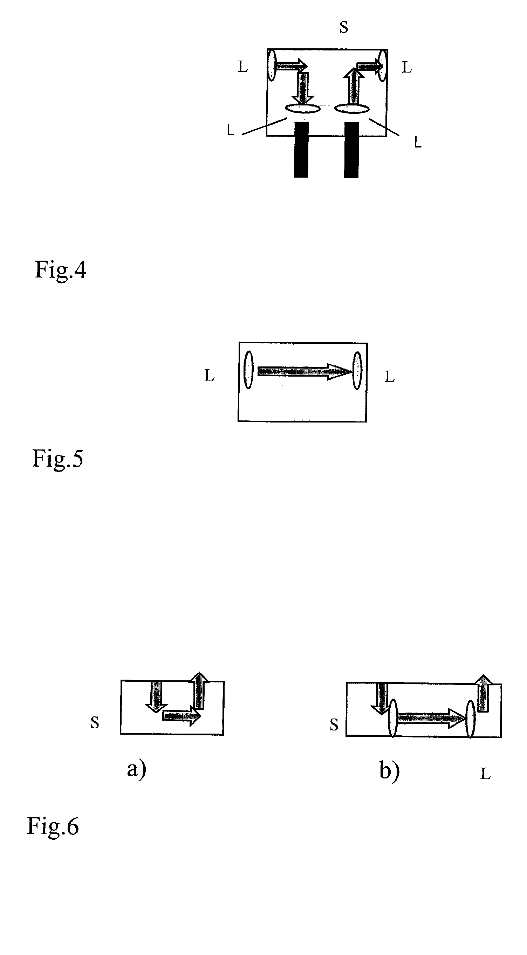

Im Falle der Entnahme des Teilnehmers aus der Busleitung wird bei den Ausführungen a) bis d) eine passive Busbrücke mit integrierten optischen Elementen zur Lichtumlenkung und Fokusierung in die Steckerbuchse gesteckt. In Fig. 6a ist eine Busbrücke mit Umlenkspiegeln S dargestellt. Fig. 6b zeigt eine Busbrücke mit Umlenkspiegel S und Linsen L zur Fokusierung des Lichtstrahls.

In einem weiteren Ausführungsbeispiel ist keine vordefinierte Koppelstelle in der optischen Busleitung vorhanden. Vor dem Anschluß des Stecker wird die Busleitung an einer beliebigen Stelle aufgetrennt. Um die Koppelverluste gering zu halten, wird ein Stecker mit einer optischen Anordnung von vier Linsen L und zwei Umlenkspiegeln S gemäß Fig. 4 direkt vor die beiden Lichtwellenleiterenden der Busleitung positioniert. Wird der Stecker wieder aus der Busleitung entfernt, wird eine Busbrücke mit zwei Linsen L gemäß Fig. 5 oder Wellenleiter in die Busleitung eingesetzt, um die Unterbrechung der Busleitung zu überbrücken.

Die Erfindung ist nicht auf die angegebenen Ausführungsbeispiele beschränkt, sondern es können elektromagnetische Wellen im sichtbaren und unsichtbaren Spektralbereich im Stecksystem geführt werden.

## Patentansprüche

1. Optisches Stecksystem bestehend aus zumindest einem Stecker und einer Steckerbuchse für den Anschluß eines Teilnehmers an eine optische Busleitung, **dadurch gekennzeichnet, daß** die Busleitung mindestens eine Koppelstelle (K) für einen zusätzlichen Busteilnehmer enthält, die als Steckerbuchse ausgebildet ist und in die ein Stecker (ST) einsteckbar ist, und daß im Stecker und/oder in der Steckerbuchse optische Elemente (S, L, LWL) zur Umlenkung und Fokussierung des Lichtes integriert sind, die das in Lichtwellenleitern (LWL) auf der Busleitung geführte Licht auf einen optischen Empfänger des zusätzlichen Busteilnehmers auskoppeln und das gesendete Licht des zusätzlichen Teilnehmers auf die Busleitung einkoppeln.

2. Optisches Stecksystem nach Anspruch 1, **dadurch gekennzeichnet, daß** die Steckerbuchse zwei Linsen (L) enthält, die das Licht derart fokussieren, daß im ausgesteckten Zustand das Licht auf der Busleitung unterbrechungsfrei übertragen wird.

3. Optisches Stecksystem nach den Anspruch 1 oder 2, **dadurch gekennzeichnet, daß** im Stecker Umlenkspiegel (S) oder Wellenleiter (LWL) integriert sind, und daß der Stecker im eingesteckten Zustand zwischen die beiden Linsen (L) der Steckerbuchse positioniert ist.

4. Optisches Stecksystem nach Anspruch 1, **dadurch gekennzeichnet, daß** in der Steckerbuchse keine Linsen enthalten sind, daß die Umlenkspiegel (S) im Stecker integriert sind und direkt vor die beiden Lichtwellenleiterenden der Busleitung in der Steckerbuchse positioniert sind.

5. Optisches Stecksystem nach Anspruch 1, **dadurch gekennzeichnet, daß** die Steckerbuchse zwei Linsen und Umlenkelemente enthält, die derart angeordnet sind, daß die Auskopplung des Lichts auf ein Empfangselement oder die Einkopplung des Lichts aus einem Sendeelement eines zusätzlichen Teilnehmers über den Stecker ohne weitere optische Elemente erfolgt.

6. Optisches Stecksystem nach Anspruch 1, **dadurch gekennzeichnet, daß** die Steckerbuchse zwei Linsen und Umlenkelemente enthält, die derart angeordnet sind, daß die Auskopplung des Lichts auf das Empfangselement oder die Einkopplung des Lichts aus dem Sendeelement eines zusätzlichen gesteckten Teilnehmers über den Stecker mit zusätzlichen Linsen erfolgt.

7. Optisches Stecksystem nach Anspruch 1, **dadurch gekennzeichnet, daß** die Steckerbuchse lediglich Umlenkelemente enthält, die derart angeordnet sind, daß die Auskopplung des Lichts auf das Empfangselement oder die Einkopplung des Lichts aus dem Sendeelement eines zusätzlichen Teilnehmers über den Stecker ohne weitere optische Elemente erfolgt.

8. Optisches Stecksystem nach Anspruch 1, **dadurch gekennzeichnet, daß** die Steckerbuchse lediglich Umlenkelemente enthält, die derart angeordnet sind, daß die Auskopplung des Lichts auf das Empfangselement oder die Einkopplung des Lichts aus dem Sendeelement eines zusätzlichen Teilnehmers über den Stecker mit zusätzlichen Linsen erfolgt.

9. Optisches Stecksystem nach einem der Ansprüche 5 bis 8, **dadurch gekennzeichnet, daß** bei Entnahme des Steckers eine passive Busbrücke mit integrierten optischen Elementen (L, S) zur Lichtumlenkung und Fokussierung in die Steckerbuchse gesteckt ist.

10. Optisches Stecksystem bestehend aus zumindest einem Stecker für den Anschluß eines Teilnehmers an eine optische Busleitung, **dadurch gekennzeichnet, daß** der Lichtwellenleiter der Busleitung an einer beliebigen Stelle aufgetrennt ist, daß ein Stecker vor die beiden Lichtwellenleiterenden der Busleitung positioniert ist, und daß bei Entnahme des Steckers eine Busbrücke die Busleitung überbrückt ist.

11. Optisches Stecksystem nach Anspruch 10, **dadurch gekennzeichnet, daß** im Stecker vier Linsen (L) und zwei Umlenkspiegel (S) direkt vor die beiden Lichtwellenleiterenden der Busleitung angeordnet sind.

12. Optisches Stecksystem nach Anspruch 10, **dadurch gekennzeichnet, daß** die Busbrücke zwei Linsen (L) enthält, um die Unterbrechung der Busleitung zu überbrücken.

13. Optisches Stecksystem nach einem der vorhergehenden Ansprüche, **dadurch gekennzeichnet, daß** der Stecker Lichtwellenleiteranschlüsse enthält.

14. Optisches Stecksystem nach einem der vorhergehenden Ansprüche, **dadurch gekennzeichnet, daß** im Stecker elektrooptische Wandlerelemente integriert sind.
